# EUROPÄISCHE PATENTANMELDUNG

(11) **EP 3 587 843 A1**
(43) Veröffentlichungstag der Anmeldung: **01.01.2020**
(21) Anmeldenummer: 19177801.8
(22) Anmeldetag: 03.06.2019
(51) Int. Cl.: F16B 43/02, F16B 13/14, F16B 13/12, F16B 43/00

(54) **BEFESTIGUNGSANORDNUNG**

(30) Priorität: 21.06.2018 DE 102018114978
(71) Anmelder: fischerwerke GmbH & Co. KG, 72178 Waldachtal (DE)
(72) Erfinder: Pfaff, Reinhold, 79331 Teningen (DE)
(74) Vertreter: Suchy, Ulrich Johannes

(57) **Zusammenfassung**

Die Erfindung betrifft eine Befestigungsanordnung mit einem Anker (1) zur Verankerung in einem Verankerungsgrund (3) und mit einer Unterlegscheibe (2) zur Anlage an einem Anbauteil (5). Der Anker (1) weist eine Widerlagerfläche (24) zur Anlage an der Unterlegscheibe (2) und die Unterlegscheibe (2) eine Lagerfläche (23) zur Anlage an der Widerlagerfläche (24) des Ankers (1) auf. Die Lagerfläche (23) ist konvex zur Widerlagerfläche (24) und zu einer Längsachse (L_{D}) einer Durchgangsöffnung (20) der Unterlegscheibe (2) hin gewölbt und um die Durchgangsöffnung (20) herum angeordnet.

## Beschreibung

Die Erfindung betrifft eine Befestigungsanordnung mit den Merkmalen des Oberbegriffs des Anspruchs 1.

Aus der Patentanmeldung WO 2017/067945 A9 ist eine Befestigungsanordnung mit einem Spreizanker und einer Unterlegscheibe bekannt. Die Befestigungsanordnung dient zu Befestigung eines Anbauteils an einem Verankerungsgrund. Die Unterlegscheibe ist als Kugelpfanne ausgeführt, in die eine Kugelscheibe eingreift, so dass der Spreizanker auch dann in ein schräg zur Oberfläche des Anbauteils verlaufendes Bohrloch eingebracht werden kann, wenn die Unterlegscheibe flächig und eben am Anbauteil anliegt. Die Schrägstellung wird mittels der Kugelpfanne und der Kugelscheibe ausgeglichen, so dass die Montage möglich ist.

Aufgabe der Erfindung ist, eine alternative Befestigungsanordnung vorzuschlagen, die aus weniger Teilen besteht und daher einfacher in der Anwendung ist.

Diese Aufgabe wird erfindungsgemäß durch eine Befestigungsanordnung mit den Merkmalen des Anspruchs 1 gelöst. Die erfindungsgemäße Befestigungsanordnung weist einen Anker zur Verankerung in einem Verankerungsgrund und eine Unterlegscheibe zur Anlage an einem Anbauteil auf. Der Anker ist beispielsweise ein Spreizanker, eine Schraube, insbesondere eine Betonschraube, oder ein Verbundanker, wobei diese Aufzählung nicht abschließend ist. Der Anker wird zur Verankerung in den Verankerungsgrund eingebracht, insbesondere eingeschoben, eingeschlagen oder eingedreht, beispielsweise in ein vorgebohrtes Bohrloch in einem mineralischen Verankerungsgrund, wie beispielsweise Beton, oder direkt in den Verankerungsgrund eingeschraubt, beispielsweise wenn der Verankerungsgrund aus Holz und der Anker eine Holzschraube ist. Der Anker erstreckt sich entlang seiner Längsachse von einem vorderen Ende, mit dem er zuerst in den Verankerungsgrund eingebracht wird, bis zu einem hinteren Ende. Das Anbauteil ist allgemein ein Gegenstand, der am Verankerungsgrund befestigt wird. Beispielsweise handelt es sich dabei um eine Stahlplatte, beispielsweise eine Anker- oder Flanschplatte eines Trägers. Die Unterlegscheibe weist die Form einer Scheibe mit einer mittigen Durchgangsöffnung zum Einführen des Ankers auf. Diese Durchgangsöffnung erstreckt sich entlang einer Längsachse der Durchgangsöffnung, wobei der Anker parallel zur Längsachse in die Durchgangsöffnung eingebracht werden kann. Beispielsweise verläuft die Längsachse der Durchgangsöffnung bei einer Unterlegscheibe mit zylindrischer Außenform zentrisch und parallel zur Höhe des Zylinders. Um die Durchgangsöffnung herum ist eine Lagerfläche der Unterlegscheibe angeordnet. Diese Lagerfläche ist insbesondere kreisringförmig und umschließt die Durchgangsöffnung insbesondere vollständig. Die Lagerfläche kann aber auch in Umfangsrichtung unterbrochen sein, also aus einzelnen Abschnitten bestehen, die in Umfangsrichtung voneinander beabstandet sind. Zur Anlage des Ankers an der Lagerfläche der Unterlegscheibe weist der Anker eine Widerlagerfläche auf, mit der er im montierten Zustand an der Lagerfläche anliegt und dadurch die Unterlegscheibe gegen das Anbauteil verspannt.

Kennzeichnend für die erfindungsgemäße Befestigungsanordnung ist, dass die Lagerfläche konvex zur Widerlagerfläche und zur Längsachse der Durchgangsöffnung hin gewölbt ist. Dies erlaubt, dass der Anker mit seiner Widerlagerfläche auch dann im Wesentlichen über den gesamten Umfang an der Lagerfläche der Unterlegscheibe anliegt, wenn die Längsachse des Ankers gegenüber der Längsachse der Durchgangsöffnung geneigt ist beziehungsweise schräggestellt ist. Beispielsweise dann, wenn ein Bohrloch versehentlich schräg zur Durchgangsöffnung in einen Verankerungsgrund eingebracht wurde, ist trotzdem eine flächig ebene Montage der Unterlegscheibe am Anbauteil möglich. "Konvex gewölbt" meint hier, dass in einem mittig verlaufenden Radialschnitt durch die Unterlegscheibe, also in einer Radialebene zur Längsachse der Durchgangsöffnung, die Lagerfläche eine Rundung aufweist beziehungsweise abgerundet ist. Insbesondere ist die Rundung derart, dass in der Radialebene die Lagerfläche näher an der Längsachse der Durchgangsöffnung liegt als der Mittelpunkt eines die Lagerfläche beschreibenden Kreisbogens. Der Radius dieses Kreisbogens kann auch als Radius der konvexen Wölbung bezeichnet werden. Der Radius des die Lagerfläche beschreibenden Kreisbogens beträgt mindestens 2 Millimeter, insbesondere mindestens 5 Millimeter. Das Verhältnis von dem Radius des die Lagerfläche in der Radialebene beschreibenden Kreisbogens zu einem Radius der Durchgangsöffnung ist insbesondere nicht kleiner als 0,5 und nicht größer als 4,5. Insbesondere liegt dieses Verhältnis in einem Bereich zwischen 1 und 3. Dabei ist mit "Radius der Durchgangsöffnung" der Radius eines Innkreises gemeint, dessen Mittelpunkt auf der Längsachse der Durchgangsöffnung liegt und der den freien, zum Durchführen des Ankers durch die Durchgangsöffnung zur Verfügung stehenden Querschnitt in einer Ebene beschreibt, auf der die Längsachse senkrecht steht. Anders ausgedrückt: Der Radius der konvexen Wölbung der Widerlagerfläche beträgt mindestens 2 Millimeter, insbesondere mindestens 5 Millimeter und/oder das Verhältnis vom Radius der konvexen Wölbung zum Radius der Durchgangsöffnung ist vorzugsweise nicht kleiner als 0,5 und nicht größer als 4,5, insbesondere nicht kleiner als 1 und nicht größer als 3. Die Lagerfläche ist also zumindest zweifach räumlich gekrümmt, nämlich zum einen kreisförmig in Umfangsrichtung um die Längsachse der Durchgangsöffnung, und zum andern, wie oben beschrieben, konvex in einer Radialebene zur Längsachse. Dabei kann die Lagerfläche in der Radialebene auch mehrfach gewölbt sein, also mehrere Kreisbögen oder Rundungen unterschiedlicher oder sich verändernden Radien aufweisen, wobei zumindest einer der Radien den oben beschriebenen Bedingungen genügt. Allerdings ist eine Fläche, die orthogonal zur Längsachse der Durchgangsöffnung verläuft, keine Lagerfläche im Sinne der Erfindung.

Durch die erfindungsgemäße Ausgestaltung der Unterlegscheibe ist es möglich, eine Schrägstellung des Ankers zur Längsachse der Durchgangsöffnung auszugleichen und trotz der Schrägstellung eine umlaufende Anlage des Ankers an der Unterlegscheibe zu gewährleisten, ohne dass eine Kugelpfanne und eine Kugelscheibe verwendet werden müssen. Die erfindungsgemäße Befestigungsanordnung besteht aus weniger Teilen, was die Montage der erfindungsgemäßen Befestigungsanordnung vereinfacht und die Kosten reduziert.

Vorzugsweise liegt der Anker an der Unterlegscheibe ausschließlich an der Lagerfläche an, sodass eine mögliche Anlage des Ankers an Stellen außerhalb der Lagerfläche eine Schrägstellung und eine hierzu notwendige Bewegung des Ankers auf der Lagerfläche nicht stört.

Weiterhin ist bevorzugt, dass die Widerlagerfläche an der Lagerfläche linienförmig, insbesondere in ringartig, anliegt. Erfindungsgemäß wird somit durch die linienförmige Anlage der Widerlagerfläche an der Lagerfläche ein Linienauflager ausgebildet, das sich in Umfangsrichtung um die Längsachse der Durchgangsöffnung erstreckt. Mit "linienförmiger" Anlage an der Lagerfläche ist hier gemeint, dass die zwischen der Lagerfläche und der Widerlagerfläche durch das Aneinanderliegen dieser beiden Flächen ausgebildete Anlagefläche im Verhältnis zu ihrer Länge nur eine geringe Breite aufweist, und insbesondere zumindest theoretisch eine Linie darstellt, wie dies beispielsweise der Fall ist, wenn die Lagerfläche konvex mit einem Radius gewölbt und die Widerlagerfläche kegelstumpfförmig, also in einem Radialschnitt gerade ausgeführt ist. Das Linienauflager kann in Umfangsrichtung auch durch einzelne Abschnitte gebildet werden, also unterbrochen sein, wobei eine durchgehende und in Längsrichtung geschlossene linienförmige Anlagefläche bevorzugt ist, da dann die Anlagefläche als Dichtung wirken kann. Die Wirkung als Dichtung ist beispielsweise dann vorteilhaft, wenn durch die Unterlegscheibe eine aushärtende Masse in ein Bohrloch, in dem der Anker im Verankerungsgrund angeordnet ist, oder zwischen den Anker und das Anbauteil eingebracht werden soll. Die linienförmige Anlagefläche wirkt dann als Dichtung und verhindert, dass die aushärtenden Masse zum hinteren Ende des Ankers hin aus dem Anbauteil beziehungsweise dem Bohrloch heraus entweichen kann.

Weiterhin ist bevorzugt, dass die Widerlagerfläche gegenüber einer Längsachse des Ankers geneigt oder gewölbt ist. Das bedeutet, dass die Widerlagerfläche in einer Radialebene zur Längsachse des Ankers unter einem Winkel ungleich 0 Grad und ungleich 90 Grad verläuft. Vorzugsweise bildet die Widerlagerfläche die Mantelfläche eines Kegelstumpfs, die Widerlagerfläche ist also kegel- beziehungsweise kegelstumpfförmig. Dabei ist der Kegelwinkel insbesondere nicht kleiner als 60 Grad und nicht größer als 120 Grad. Insbesondere ist der Kegelwinkel nicht kleiner als 80 Grad und nicht größer als 100 Grad. Insbesondere weist der Anker einen Kopf auf, der wie der Kopf einer Senkkopfschraube, insbesondere einer Senkkopfschraube gemäß der DIN EN ISO 10642 (2004-06) ausgebildet ist.

Bei einer bevorzugten Ausgestaltungsform der erfindungsgemäßen Befestigungsanordnung weist der Anker ein Verankerungselement mit einem Innengewinde und eine Schraube mit einem Gewindeabschnitt zum Eingriff in das Innengewinde auf. Der Anker ist also zumindest zweiteilig. Das Verankerungselement ist insbesondere eine Innengewindehülse, die als Verbundanker mit einer aushärtenden Masse in ein im Verankerungsgrund erstelltes Bohrloch eingeklebt wird. Die Schraube weist bei dieser Ausgestaltungsform einen Schraubenkopf auf, dessen Außendurchmesser größer als der Außendurchmesser des Gewindeabschnitts ist und dessen Kopfunterseite die Widerlagerfläche bildet. Insbesondere ist die Schraube eine Senkkopfschraube mit einer kegelstumpfförmigen Widerlagerfläche mit einem Kegelwinkel von 90 Grad, wie sie aus der DIN EN ISO 10642 (2004-06) bekannt ist, so dass Schraube ein kostengünstiges Normteil ist. Bei dieser Ausgestaltungsform der Schraube ist vorzugsweise zwischen dem Schraubenkopf und den Gewindeabschnitt ein gewindefreier Abstandsabschnitt ausgebildet, der insbesondere zylindrisch ist und der vorzugsweise den gleichen Außendurchmesser wie der Gewindeabschnitt aufweist.

Bei einer weiteren bevorzugten Ausgestaltungsform der erfindungsgemäßen Befestigungsanordnung weist die Unterlegscheibe einen Verfüllkanal zum Einbringen einer aushärtenden Masse von einer Außenseite der Unterlegscheibe in die Durchgangsöffnung auf. Der Verfüllkanal kann ganz oder abschnittsweise schräg, radial oder axial zur Längsachse der Durchgangsöffnung verlaufen. Der Verfüllkanal weist eine Eintritts- und eine Austrittsöffnung auf. Durch die Eintrittsöffnung wird nach der Installation der Befestigungsanordnung an einem Verankerungsgrund beziehungsweise an einem Anbauteil die aushärtende Masse in den Verfüllkanal eingebracht, aus dem die Masse an der Austrittsöffnung in die Durchgangsöffnung austritt. Die Austrittsöffnung ist vorzugsweise in einem zylindrischen Abschnitt der Durchgangsöffnung angeordnet, der sich an dem der Widerlagerfläche abgewandten Ende der Durchgangsöffnung befindet. Der Verfüllkanal mündet derart in den zylindrischen Abschnitt, dass der Verfüllkanal nicht im Bereich der Lagerfläche in die Durchgangsöffnung mündet. Dies verhindert, dass die aushärtende Masse beim Einbringen der Masse in die Durchgangsöffnung auch dann nicht nach außen in Richtung zum hinteren Ende des Ankers aus der Unterlegscheibe austreten kann, wenn der Anker zur Unterlegscheibe geneigt ist, also wenn die beiden Längsachsen nicht parallel zu einander oder aufeinander liegen, wodurch die als Dichtung wirkende linienförmige Anlagefläche lokal in die Durchgangsöffnung hinein zum zylindrischen Abschnitt hin verschoben wird.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden.

Die Erfindung wird nachfolgend anhand eines in den Figuren dargestellten Ausführungsbeispiels näher erläutert.

Es zeigen:
- Figur 1: eine erfindungsgemäße Befestigungsanordnung nach der Montage ohne eine Schiefstellung in einer Schnittdarstellung;
- Figur 2: eine erfindungsgemäße Befestigungsanordnung nach der Montage mit einer Schiefstellung in einer Schnittdarstellung; und
- Figur 3: die Schraube und die Unterlegscheibe der erfindungsgemäßen Befestigungsanordnung in einer Schnittdarstellung.

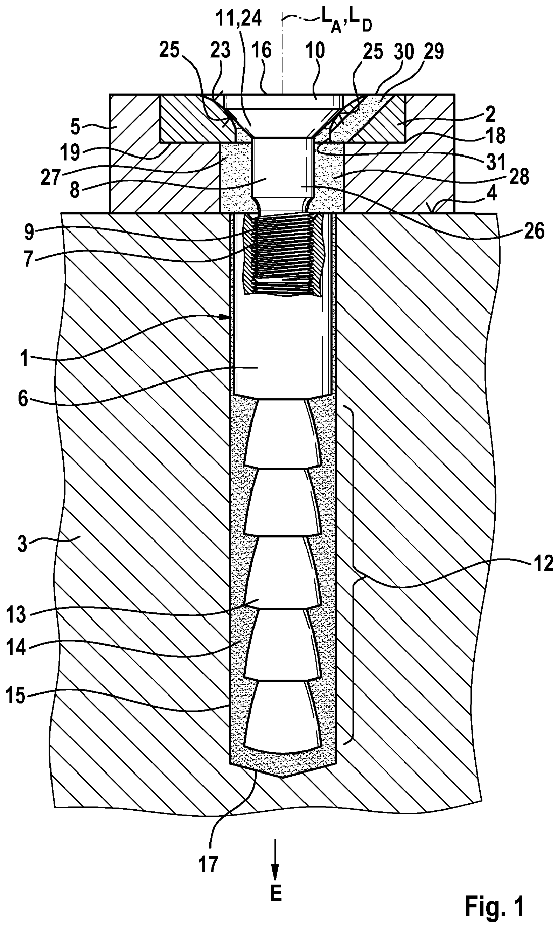

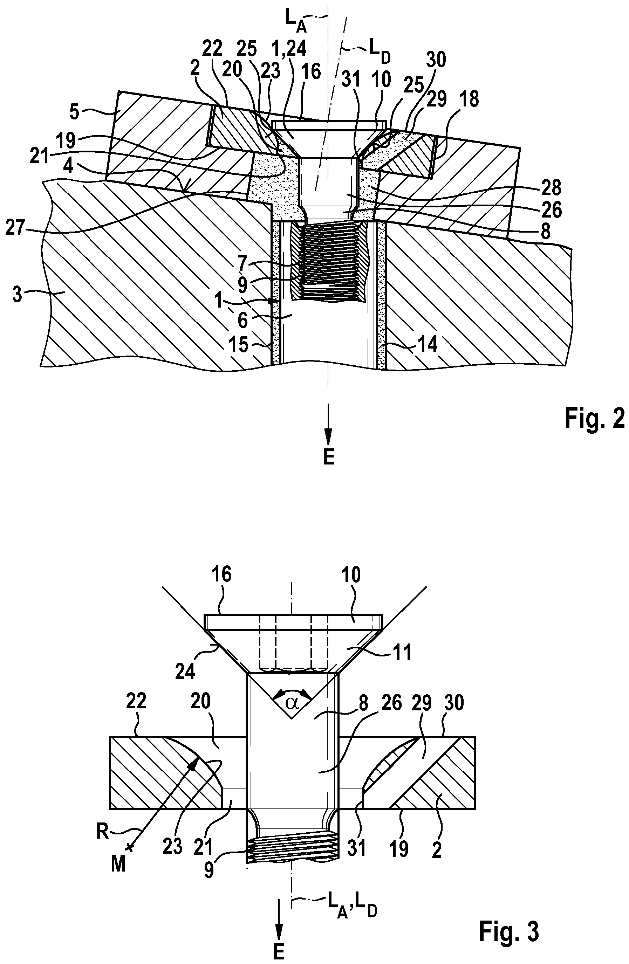

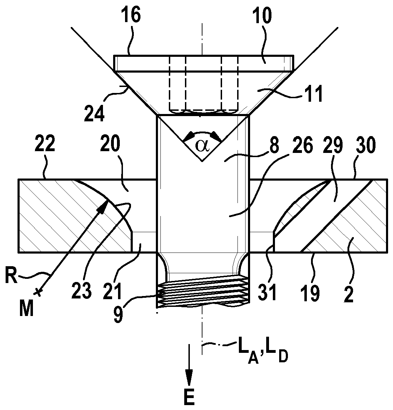

Die Figuren 1 und 2 zeigen eine erfindungsgemäße Befestigungsanordnung mit einem Anker 1 und einer Unterlegscheibe 2. Der Anker 1 dient zur Verankerung in einem Verankerungsgrund 3, hier in einem Bauteil aus Beton. Auf der Außenseite 4 des Verankerungsgrunds 3 ist eine Stahlplatte als Anbauteil 5 angeordnet, das flächig und eben an der Außenseite 4 anliegt. Der Anker 1 ist zweiteilig ausgeführt und umfasst ein Verankerungselement 6 mit einem Innengewinde 7 und eine Schraube 8 mit einem Gewindeabschnitt 9 zum Eingriff in das Innengewinde 7. In den Figuren 1 und 2 ist die Befestigungsanordnung jeweils in einem montierten Zustand dargestellt, in dem der Gewindeabschnitt 9 in das Innengewinde 7 eingeschraubt ist. Die Schraube 8 ist eine metrische Senkkopfschraube gemäß DIN EN ISO 10642 (2004-06) mit einem Schraubenkopf 10, dessen Kopfunterseite 11 die Mantelfläche eines Kegelstumpfs ist, wobei der Kegelwinkel α 90 Grad beträgt (Fig. 3). Das Verankerungselement 6 ist eine Gewindehülse aus Stahl, die einen Verankerungsabschnitt 12 mit mehreren Verankerungskonen 13 aufweist. Das Verankerungselement 6 ist mittels einer ersten aushärtenden Masse 14 in ein Bohrloch 15 eingeklebt und dadurch im Verankerungsgrund 3 verankert. Die dem Verankerungselement 6 abgewandte Außenseite des Schraubenkopfs 10 bildet das hintere Ende 16 des Ankers 1, der sich entlang seiner Längsachse L_{A} in Einbringrichtung E des Ankers 1 in das Bohrloch 15 bis zu seinem vorderen Ende 17 erstreckt. Das Anbauteil 5 weist an seiner dem Verankerungsgrund 3 abgewandten Außenseite eine zylindrische Senkung 18 auf, zur Aufnahme der Unterlegscheibe 2.

Die Unterlegscheibe 2 weist die Form eines zylindrischen Kreisrings auf und liegt mit ihrer dem Verankerungsgrund 3 zugewandten ebenen Vorderseite 19 eben und flächig am Grund der Senkung 18 am Anbauteil 5 an. Die Unterlegscheibe 2 weist eine zentrische Durchgangsöffnung 20 auf, die sich entlang einer Längsachse L_{D} erstreckt. Die Längsachse L_{D} bildet die Mitte der Unterlegscheibe 2 und erstreckt sich in Richtung der Höhe des zylindrischen Kreisrings orthogonal zur Vorderseite 19. Die Durchgangsöffnung 20 weist an ihrem vorderen, dem Schraubenkopf 10 abgewandten Ende einen zylindrischen Abschnitt 21 auf, an den sich zur Rückseite 22 der Unterlegscheibe 2 hin ein Abschnitt mit einer Lagerfläche 23 anschließt, die konvex zu einer Widerlagerfläche 24 der Schraube 8 hin gewölbt ist. Diese Widerlagerfläche 24 der Schraube 8 ist die Widerlagerfläche 24 des Ankers 1, an der der Anker 1 an der Lagerfläche 23 anliegt, sodass der Anker 1 über die Unterlegscheibe 2 das Anbauteil 5 gegen die Außenseite 4 des Verankerungsgrunds 3 verspannt. In Figur 3 ist die konvex gewölbte Lagerfläche 23 genauer dargestellt. Figur 3 zeigt einen Schnitt in einer Radialebene zur und durch die Längsachse L_{D} der Durchgangsöffnung 20, die in den Figuren 1 und 3 dargestellten Fällen mit der Längsachse L_{A} des Ankers 1 zusammenfällt. Es ist zu sehen, dass die konvexe Wölbung der Lagerfläche 23 im Radialschnitt der Figur 3 durch einen Kreisbogen mit einem Radius R beschrieben werden kann, dessen Mittelpunkt M so angeordnet ist, dass die Lagerfläche 23 näher an der Längsachse L_{D} der Durchgangsöffnung 20 als der Mittelpunkt M liegt. Im dargestellten Ausführungsbeispiel beträgt der Radius R 15 Millimeter und ist damit um das 1,6-fache größer als ein minimaler Radius der Durchgangsöffnung 20, die einen Durchmesser von 19 Millimeter aufweist, in dem für das Einführen der Schraube 8 des Ankers 1 maßgebenden zylindrischen Abschnitt 21. Die Lagerfläche 23 ist in Umfangsrichtung durchgehend um die Durchgangsöffnung 20 herum angeordnet, sodass die Schraube 8 mit ihrer kegelförmiger Kopfunterseite 11, die die Widerlagerfläche 24 bildet, linienförmig an der Lagerfläche 23 anliegt. Durch die linienförmige Anlage wird eine kreisringförmige Anlagefläche 25 gebildet, an der der Anker 1 ausschließlich an der Unterlegscheibe 2 anliegt. Durch die Ausbildung der konvex gewölbten Lagerfläche 23 an der Unterlegscheibe 5 ist es möglich, dass die Unterlegscheibe 2 mit ihrer Vorderseite 19 auch dann flächig am Anbauteil 5 anliegt, wenn der Anker 1 zur Unterlegscheibe 2 schräg gestellt ist, also dann, wenn die Längsachse L_{A} des Ankers 1 nicht parallel zur Längsachse L_{D} der Durchgangsöffnung 20, sondern schräg beziehungsweise geneigt zur Längsachse L_{D} ausgerichtet ist, wie dies Figur 3 zeigt. Aufgrund der konvexen Wölbung der Lagerfläche 23 bildet die Lagerfläche 23 selbst bei dieser Schrägstellung mit der Widerlagerfläche 24 eine ringartige, umlaufende Anlagefläche 25 als Linienauflager aus.

Die Schraube 8 weist zwischen dem Schraubenkopf 10 im Gewindeabschnitt 9 einen gewindefreien Abstandsabschnitt 26 auf, der den gleichen Außendurchmesser aufweist, wie der Gewindeabschnitt 9, und der von einem Ringspalt 27 im Anbauteil 5 umgeben ist. Um eine Bewegung zwischen dem Anbauteil 5 und der Schraube 8 aufgrund des Ringspalts 27 zu verhindern, wird der Ringspalt 27 mit einer zweiten aushärtenden Masse 28 verfüllt. Hierzu ist in der Unterlegscheibe 2 ein Verfüllkanal 29 ausgebildet, der von einer Eintrittsöffnung 30 an der Rückseite 22 der Unterlegscheibe 2 zu einer Austrittsöffnung 31 im Bereich des zylindrischen Abschnitts 21 der Durchgangsöffnung 20 schräg zur Längsachse L_{D} der Durchgangsöffnung 20 verläuft. Dadurch, dass der Verfüllkanal 29 in den zylindrischen Abschnitt 21 und nicht im Bereich der Lagerfläche 23 in die Durchgangsöffnung 20 mündet, ist auch bei einer Schrägstellung, wie sie in Figur 2 dargestellt ist, ein Verfüllen des Ringspalts 27 möglich. Beim Verfüllen wirkt die linienförmige Anlagefläche 25 als Dichtung, so dass die durch den Verfüllkanal 29 eingefüllte zweite aushärtende Masse 28 nicht durch die Durchgangsöffnung 20 nach hinten, zur Rückseite 22 der Unterlegscheibe 2 am Schraubenkopf 10 vorbei aus der Durchgangsöffnung 20 entweichen kann.

### Bezuqszeichenliste

**Befestigungsanordnung**
- 1: Anker
- 2: Unterlegscheibe
- 3: Verankerungsgrund
- 4: Außenseite des Verankerungsgrunds 3
- 5: Anbauteil
- 6: Verankerungselement
- 7: Innengewinde
- 8: Schraube
- 9: Gewindeabschnitt
- 10: Schraubenkopf
- 11: Kopfunterseite
- 12: Verankerungsabschnitt
- 13: Verankerungskonus
- 14: erste aushärtende Masse
- 15: Bohrloch
- 16: hinteres Ende des Ankers 1
- 17: vorderes Ende des Ankers 1
- 18: Senkung
- 19: Vorderseite der Unterlegscheibe 2
- 20: Durchgangsöffnung
- 21: zylindrischer Abschnitt der Durchgangsöffnung 20
- 22: Rückseite der Unterlegscheibe 2
- 23: Lagerfläche
- 24: Widerlagerfläche
- 25: Anlagefläche
- 26: Abstandsabschnitt
- 27: Ringspalt
- 28: zweite aushärtende Masse
- 29: Verfüllkanal
- 30: Eintrittsöffnung
- 31: Austrittsöffnung

- E: Einbringrichtung
- L_{A}: Längsachse des Ankers 1
- L_{D}: Längsachse der Durchgangsöffnung 20
- α: Konuswinkel des Schraubenkopfs 10

## Patentansprüche

1. Befestigungsanordnung mit einem Anker (1) zur Verankerung in einem Verankerungsgrund (3) und mit einer Unterlegscheibe (2) zur Anlage an einem Anbauteil (5), wobei der Anker (1) eine Widerlagerfläche (24) zur Anlage an der Unterlegscheibe (2) und die Unterlegscheibe (2) eine Lagerfläche (23) zur Anlage an der Widerlagerfläche (24) des Ankers (1) aufweist, und wobei die Lagerfläche (23) um eine Durchgangsöffnung (20) der Unterlegscheibe (2) herum angeordnet ist, wobei sich die Durchgangsöffnung (20) entlang einer Längsachse (L_{D}) erstreckt,
**dadurch gekennzeichnet,**
**dass** die Lagerfläche (23) konvex zur Widerlagerfläche (24) und zur Längsachse (L_{D}) hin gewölbt ist.

2. Befestigungsanordnung nach Anspruch 1, **dadurch gekennzeichnet, dass** der Anker (1) an der Unterlegscheibe (2) ausschließlich an der Lagerfläche (23) anliegt.

3. Befestigungsanordnung nach einem der vorstehenden Ansprüche, **dadurch gekennzeichnet, dass** die Widerlagerfläche (24) an der Lagerfläche (23) linienförmig, insbesondere ringartig anliegt.

4. Befestigungsanordnung nach einem der vorstehenden Ansprüche, **dadurch gekennzeichnet, dass** die Widerlagerfläche (24) gegenüber einer Längsachse (L_{A}) des Ankers (1) geneigt oder gewölbt ist.

5. Befestigungsanordnung nach einem der vorstehenden Ansprüche, **dadurch gekennzeichnet, dass** die Widerlagerfläche (24) die Mantelfläche eines Kegelstumpfs ist.

6. Befestigungsanordnung nach einem der vorstehenden Ansprüche, **dadurch gekennzeichnet, dass** der Anker (1) ein Verankerungselement (6) mit einem Innengewinde (7) aufweist und eine Schraube (8) mit einem Gewindeabschnitt (9) zum Eingriff in das Innengewinde (7), wobei die Schraube (8) einen Schraubenkopf (10) aufweist, dessen Kopfunterseite (11) die Widerlagerfläche (24) bildet.

7. Befestigungsanordnung nach Anspruch 6, **dadurch gekennzeichnet, dass** die Schraube (8) zwischen dem Schraubenkopf (10) und dem Gewindeabschnitt (9) ein gewindefreier Abstandsabschnitt (26) ausgebildet ist.

8. Befestigungsanordnung nach Anspruch 7, **dadurch gekennzeichnet, dass** der Abstandsabschnitt (26) den gleichen Außendurchmesser wie der Gewindeabschnitt (9) aufweist.

9. Befestigungsanordnung nach einem der vorstehenden Ansprüche, **dadurch gekennzeichnet, dass** die Unterlegscheibe (2) einen Verfüllkanal (29) zum Einbringen einer aushärtenden Masse (28) in die Durchgangsöffnung (20) aufweist.

10. Befestigungsanordnung nach Anspruch 9, **dadurch gekennzeichnet, dass** die Durchgangsöffnung (20) an ihrem der Widerlagerfläche (24) abgewandten Ende einen zylindrischen Abschnitt (21) aufweist, in den der Verfüllkanal (29) mündet, derart, dass der Verfüllkanal (29) nicht im Bereich der Lagerfläche (23) in die Durchgangsöffnung (20) mündet.
